# EUROPÄISCHE PATENTSCHRIFT

(11) **EP 1 848 224 B1**
(45) Veröffentlichungstag und Bekanntmachung des Hinweises auf die Patenterteilung: **21.07.2010**
(21) Anmeldenummer: 07006898.6
(22) Anmeldetag: 03.04.2007
(51) Int. Cl.: H04N 17/00

(54) **Verfahren und Vorrichtung zur Kalibration und zum Test von Sternkameras**
Method and device for calibrating and testing star cameras
Procédé et dispositif destinés au calibrage et au test de télescopes

(30) Priorität: 13.04.2006 DE 102006018866
(43) Veröffentlichungstag der Anmeldung: 24.10.2007
(73) Patentinhaber: Deutsches Zentrum für Luft- und Raumfahrt e.V., 51147 Köln (DE)
(72) Erfinder: Eckardt, Andreas, 12524 Berlin (DE); Börner, Anko, 12557 Berlin (DE); Schischmanow, Adrian, 16540 Hohen Neuendorf (DE); Rollenhagen, Fritz, 10369 Berlin (DE); Tschernjawski, Valentin, 13156 Berlin (DE)
(74) Vertreter: Bressel, Burkhard

(56) Entgegenhaltungen:
- DE-C1- 19 727 281
- US-A1- 2003 215 129
- WENJIAN CAI ET AL: "Computer generated holograms embedded in glass fabricated with a femtosecond laser" LASERS AND ELECTRO-OPTICS, 2005. (CLEO). CONFERENCE ON BALTIMORE, MD, USA MAY 22-27, 2005, PISCATAWAY, NJ, USA,IEEE, 22. Mai 2005 (2005-05-22), Seiten 1183-1185, XP010876768 ISBN: 1-55752-795-4

## Beschreibung

Die Erfindung betrifft ein Verfahren und eine Vorrichtung zur Kalibration und zum Test von Stemkameras.

Der Einsatz von Satelliten, z.B. für Kommunikationsaufgaben und für die Erdfernoder Planetenerkundung, erfordert immer ein exaktes Wissen um Position (x, y, z) und Lage (ω, κ, φ) des Satelliten.

Die Position eines Satelliten kann durch verschiedene Messsysteme entweder von der Erde aus oder im Orbit direkt bestimmt werden. Außerdem lässt sich die Position eines Satelliten auf seiner Bahn sehr genau modellieren und damit vorhersagen. Heutzutage werden in der Regel GPS-Systeme zur Positionsmessung angewendet.

Zur Lagemessung finden beispielsweise Kreiselsysteme, Magnetometer und Sternsensoren Anwendung. Sternsensoren (oder Stemkameras) sind fest auf dem Satelliten montiert und so ausgerichtet, dass sie in den Weltraum schauen. Sie sind entweder als Zeilen- oder als Matrixsensoren ausgelegt, die den Weltraum während des Messzeitraumes entweder scannen (Zeile) oder in Einzelbildern bzw. Bildfolgen abbilden, Anhand der durch die Kamera abgebildeten Sterne und einem mitgeführten Sternkatalog ist es möglich, Sternformationen wieder zu erkennen und damit die Blickrichtung der Sternkamera zu bestimmen. Dabei kommt der exakten geometrischen Kalibration der Sternkameras eine große Bedeutung zu.

Beim Kalibrationsvorgang werden die Sternkameras in der Regel mit einem Goniometeransatz vermessen. Dazu wird ein Laserstrahl aufgeweitet und anschließend kollimiert. Damit wird in dem Sternsensor aus dem Unendlichen einfallendes Licht simuliert. Die Kamera wird so auf einen Drehtisch befestigt, dass sie in den aufgeweiteten Laserstrahl schaut. Die Sammellinse vor dem Sternsensor sorgt dann für eine scharfe Abbildung eines Punktes in der Bildebene. Durch gezieltes Drehen der Kamera zum einfallenden Lichtbündel kann jedes beliebige Pixel des Sensors beleuchtet werden, die Drehwinkel werden gespeichert. Als Ergebnis der Kalibration liegt dann für jedes Pixel eine Blickrichtung vor.

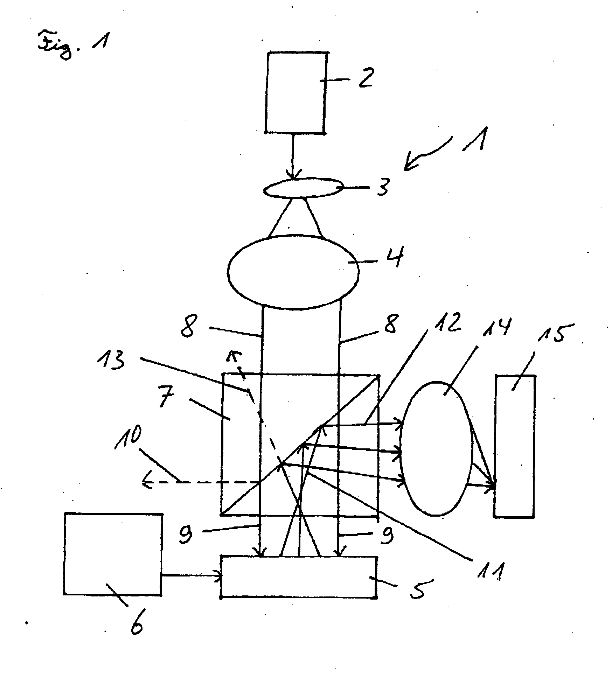

Die Kalibration nach oben beschriebenem Verfahren gestattet immer nur die Abbildung eines Objektpunktes zu einem Zeitpunkt. Die Simulation der Erfassung von Sternformationen zu einem Aufnahmezeitpunkt (Matrixsensoren) ist so nicht möglich. Sternformationen können beispielsweise durch die Projektion eines Sternbildes auf eine Projektionsfläche simuliert werden, wie es in Planetarien umgesetzt wird. Dabei kommt es aber wiederum auf die exakte Kenntnis des Projektors und der Projektionsfläche an. Beispielsweise würde die minimale Verschiebung des Projektors zu einer Maßstabsänderung und es damit zu keinem realitätsgetreuen Abbild einer Sternformation kommen. Somit wären Test und Kalibration der Sternkameras nicht möglich.

Außerdem ist festzustellen, dass der radiometrischen Auslegung von Sternsensoren in der Regel zu wenig Bedeutung beigemessen wird. Für die Algorithmen zur Sternfindung spielt das Signal-Rausch-Verhältnis eine entscheidende Rolle, von daher muss das Strahlungsangebot für die Sternkameras in den Laboratorien auf die realen Verhältnisse abgestimmt sein, was einer radiometrischen Kalibration entspricht.

Aus der DE 197 27 281 C1 ist eine Vorrichtung zur geometrischen Kalibrierung von CCD-Kameras bekannt, umfassend eine kohärente Lichtquelle und ein synthetisches Hologramm zur Erzeugung einer wohldefinierten Teststruktur, wobei die kohärente Lichtquelle und das Hologramm derart zueinander angeordnet sind, dass bei Beleuchtung des Hologramms durch die kohärente Lichtquelle das Hologramm eine dreidimensionale Teststruktur um die Fokalebene der CCD-Kamera herum erzeugt.

Aus dem Fachartikel WENJIAN CAI ET AL.: "Computer generated holograms embedded in glass fabricated with a femtosecond laser" LASERS AND ELECTRO-OPTICS, 2005. (CLEO). CONFERENCE ON BALTIMORE, MD, USA MAY 22-27, 2005, PISCATAWAY, NJ, USA, IEEE, 22. Mai 2005 (2005-05-22), Seiten 1183-1185, XP010876768 ISBN: 1-55752-795-4 ist es bekannt, dynamische Lichtmodulationen zur Erzeugung dynamischer Hologramme zu erzeugen.

Der Erfindung liegt daher das technische Problem zugrunde, ein Verfahren und eine Vorrichtung zur Kalibration und zum Test von Sternkameras zu schaffen.

Die Lösung des technischen Problems ergibt sich durch die Gegenstände mit den Merkmalen der Patentansprüche 1 und 5. Weitere vorteilhafte Ausgestaltungen der Erfindung ergeben sich aus den Unteransprüchen.

Die Vorrichtung zur Kalibration und zum Test von Sternkameras umfasst mindestens eine kohärente Lichtquelle zur Erzeugung einer ebenen Wellenfront, mindestens einen dynamischen Lichtmodulator und eine Recheneinheit, wobei mittels der Recheneinheit der dynamische Lichtmodulator zur Erzeugung definierter Beugungsstrukturen angesteuert wird, wobei die Beugungsstrukturen definierte Sternformationen in dem Blickfeld der Sternkamera erzeugen, mittels derer eine Bewegung der Sternkamera simuliert wird. Hierdurch kann gleichzeitig eine geometrische Kalibration als auch ein Funktionstest durchgeführt werden. Durch die gleichzeitige Abbildung mehrerer simulierter Sterne können Sternformationen nachgebildet werden, die dann eine Blickrichtungsschätzung bzw. geometrische Kalibration gestatten, wobei auf größere Gerätschaften wie Manipulator, Drehtisch oder Projektionswand verzichtet werden kann. Eine dynamische Simulation ist dadurch möglich, so dass prinzipiell alle bekannten Sternbilder sowie Lageveränderungen des Sensors simuliert werden können, wodurch ein Funktionstest der Sternkamera möglich ist.

Weiter wird die Intensität der einfallenden Strahlung gemäß den a priori bekannten Werten eines Sternkataloges angepasst, wobei vorzugsweise die Anpassung durch die Lichtquelle und/oder den Lichtmodulator erfolgt. Hierdurch erfolgt insbesondere der Test der Sternkamera unter Bedingungen, die weitgehend den realen Verhältnissen entsprechen. Hierdurch ist auch eine radiometrische Kalibration möglich.

In einer weiteren bevorzugten Ausführungsform werden als Lichtquelle mehrere Laser unterschiedlicher Wellenlänge verwendet. Hierdurch kann ein entsprechend gemischtes "Weißlicht" erzeugt werden, was den reellen Bedingungen stärker entspricht und eine spektrale Kalibration ermöglicht.

In einer weiteren bevorzugen Ausführungsform sind die Lichtmodulatoren als reflektive und/oder transmittive Lichtmodulatoren ausgebildet.

Der oder die reflektiven Lichtmodulatoren sind vorzugsweise als Mikro-Spiegel-Array ausgebildet, wobei die Spiegel beispielsweise mittels Piezoelementen verstellbar sind. Alternativ zum Mikro-Spiegel-Array kann der reflektive Lichtmodulator auch als Membranspiegel ausgebildet sein. Dieser besteht vorzugsweise aus einer sehr dünnen Siliziumnitrid-Membran von beispielsweise 1 µm Dicke, die einige 10 µm über einem Elektrodenarray aufgespannt ist. Durch elektrostatische Anziehung kann die Membran gezielt rechnergesteuert sehr schnell verformt werden, wodurch mit der Membran verbundene Spiegel verkippt werden. Die Spiegel werden dabei vorzugsweise durch eine Aluminium-Beschichtung auf einem Substrat realisiert, das mit der Membran verbunden ist. Alternativ kann die Membran aus dem Substrat herausgebildet werden.

Der transmittive Lichtmodulator ist vorzugsweise als Flüssigkristall-Array ausgebildet.

Die Erfindung wird nachfolgend anhand eines bevorzugten Ausführungsbeispieles näher erläutert. Die einzige Figur zeigt ein schematisches Blockschaltbild einer Vorrichtung zum Kalibrieren und Testen einer Stemkamera.

Die Vorrichtung 1 zum Kalibrieren und Testen einer Sternkamera umfasst eine kohärente Lichtquelle 2, in deren optischer Achse ein optisches Element 3 zur Strahlaufweitung und daran anschließend eine Kollimatoroptik 4 zur Parallelisierung angeordnet ist. Des Weiteren umfasst die Vorrichtung 1 einen dynamischen Lichtmodulator 5, der mit einer Recheneinheit 6 verbunden ist und über diese angesteuert wird. In der optischen Achse der Kollimatoroptik 4 liegt ein Strahlteiler 7. Der Strahlteiler 7 teilt zunächst die von der Kollimatoroptik 4 kommende Strahlung 8 in einen durchlaufenden Strahl 9 und einen reflektierten Strahl 10, wobei letzterer nicht weiter betrachtet werden soll, Von dem Lichtmodulator 5, der als reflektiver Lichtmodulator ausgebildet ist, werden die durchlaufenden Strahlen 9 reflektiert, Der von dem Lichtmodulator 5 reflektierte Strahl 11 wird wieder geteilt, nämlich in einen reflektierten Teilstrahl 12 und einen durchlaufenden Teilstrahl 13, wobei letzterer nicht weiter betrachtet werden soll. Der reflektierte Teilstrahl 12 fällt dann auf ein Objektiv 14, von wo dieser scharf auf eine Fokalebene 15 abgebildet wird. Objektiv 14 und Fokalebene 15 sind dabei Teil der zu kalibrierenden und zu testenden Sternkamera, wobei auf der Fokalebene Zeilen- oder Matrix-Sensoren angeordnet sein können.

Mittels der Recheneinheit 6 wird nun der Lichtmodulator 5 derart angesteuert, dass dieser durch Änderung der Amplituden- und Phasenfunktion der einfallenden ebenen Welle die wesentlichen geometrischen und radiometrischen Eigenschaften einer definierten Sternformation nachbilden kann, die dann über den Strahlteiler 7 auf die Fokalebene 15 abgebildet wird. Durch Auswertung der Ausgangsdaten der Fokalebene 15 kann dann die Blickrichtung der Pixel geschätzt werden (geometrische Kalibration) und eine radiometrische Kalibration durchgeführt werden. Durch entsprechende Ansteuerung des Lichtmodulators 5 durch die Recheneinheit 6 kann dann eine Bewegung der Sternkamera simuliert werden, indem die abgebildete Sternformation über die Fokalebene wandert. Hierdurch können zum einen alle Pixel kalibriert werden und auch das dynamische Verhalten der Stemkamera getestet werden.

## Patentansprüche

1. Verfahren zur Kalibration und zum Test von Sternkameras, mittels mindestens einer kohärenten Lichtquelle (2) zur Erzeugung einer ebenen Wellenfront, mindestens einem dynamischen Lichtmodulator (5), einer Recheneinheit (6) und eines Sternkatalogs, wobei mittels der Recheneinheit (6) der dynamische Lichtmodulator (5) zur Erzeugung definierter Beugungsstrukturen angesteuert wird, wobei die Beugungsstrukturen definierte Sternformationen des Sternkatalogs in dem Blickfeld der Sternkamera erzeugen, mittels derer eine Bewegung der Sternkamera simuliert wird, wobei durch Auswertung der Ausgangsdaten einer Fokalebene der Sternkamera eine Blickrichtung der Pixel der Sternkamera geschätzt wird, wobei die Intensität der einfallenden Strahlung in die Sternkamera gemäß den a priori bekannten Werten des Sternkataloges angepasst wird.

2. Verfahren nach Anspruch 1, **dadurch gekennzeichnet, dass** die Intensität durch die Lichtquelle (2) und/oder den Lichtmodulator (5) angepasst wird.

3. Verfahren nach einem der vorangegangenen Ansprüche, **dadurch gekennzeichnet, dass** als Lichtquelle (2) mehrere Laser unterschiedlicher Wellenlänge verwendet werden.

4. Verfahren nach einem der vorangegangenen Ansprüche, **dadurch gekennzeichnet, dass** als dynamische Lichtmodulatoren (5) reflektive und/oder transmittive Lichtmodulatoren verwendet werden.

5. Vorrichtung (1) zur Kalibration und zum Test von Sternkameras, umfassend mindestens eine kohärente Lichtquelle (2) zur Erzeugung einer ebenen Wellenfront, mindestens einen dynamischen Lichtmodulator (5), eine Recheneinheit (6) und einen Sternkatalog, wobei mittels der Recheneinheit (6) der dynamische Lichtmodulator (5) zur Erzeugung definierter Beugungsstrukturen angesteuert wird, wobei die Beugungsstrukturen definierte Sternformationen des Sternkataloges in dem Blickfeld der Sternkamera erzeugen, mittels derer eine Bewegung der Sternkamera simuliert wird, wobei durch Auswertung der Ausgangsdaten einer Fokalebene der Sternkamera eine Blickrichtung der Pixel der Sternkamera geschätzt wird, wobei die Intensität der einfallenden Strahlung gemäß den a priori bekannten Werten des Sternkataloges angepasst ist.

6. Vorrichtung nach Anspruch 5, **dadurch gekennzeichnet, dass** die Intensität durch die Intensität der Lichtquelle (2) und/oder den Lichtmodulator (5) angepasst wird.

7. Vorrichtung nach einem der Ansprüche 5 oder 6, **dadurch gekennzeichnet, dass** die Lichtquelle (2) durch mehrere Laser unterschiedlicher Wellenlänge gebildet wird.

8. Vorrichtung nach einem der Ansprüche 5 bis 7, **dadurch gekennzeichnet, dass** die dynamischen Lichtmodulatoren (5) als reflektive und/oder transmittive Lichtmodulatoren ausgebildet sind.

9. Vorrichtung nach einem der Ansprüche 5 bis 8, **dadurch gekennzeichnet, dass** der Lichtmodulator (5) als reflektiver Lichtmodulator ausgebildet ist, dessen optische Achse senkrecht zu einer optischen Achse der Sternkamera steht, wobei die Lichtquelle (2) parallel zur optischen Achse des Lichtmodulators (5) emittiert, wobei zwischen Lichtquelle (2) und Lichtmodulator (5) ein Strahlteiler (7) angeordnet ist.

## Claims

1. Method for calibration and testing of star cameras, using at least one coherent light source (2) to generate a planar wavefront, at least one dynamic light modulator (5), a data processor (6), and a star catalogue, the dynamic light modulator (5) being controlled by means of the data processor (6) to generate defined diffraction structures, the diffraction structures generating defined star formations of the star catalogue in the field of view of the star camera, by means of which a movement of the star camera is simulated, while a viewing direction of the pixels in the star camera is estimated by evaluating the output data from a focal plane of the star camera, the intensity of the incident radiation in the star camera being adapted according to the known a priori values from the star catalogue.

2. Method according to claim 1, **characterised in that** the intensity is adapted by the light source (2) and/or the light modulator (5).

3. Method according to one of the preceding claims, **characterised in that** several lasers of different wavelengths are used as light source (2).

4. Method according to one of the preceding claims, **characterised in that** reflective and/or transmittive light modulators are used as dynamic light modulators (5).

5. Device (1) for calibration and testing of star cameras, comprising at least one coherent light source (2) for generating a planar wavefront, at least one dynamic light modulator (5), a data processor (6) and a star catalogue, the dynamic light modulator (5) being controlled by means of the data processor (6) to generate defined diffraction structures, the diffraction structures generating defined star formations of the star catalogue in the field of view of the star camera, by means of which a movement of the star camera is simulated, while a viewing direction of the pixels in the star camera is estimated by evaluating the output data from a focal plane of the star camera, the intensity of the incident radiation being adapted according to the known a priori values from the star catalogue.

6. Device according to claim 5, **characterised in that** the intensity is adapted by the intensity of the light source (2) and/or the light modulator (5).

7. Device according to one of claims 5 or 6, **characterised in that** the light source (2) is formed by several lasers of different wavelengths.

8. Device according to one of claims 5 to 7, **characterised in that** the dynamic light modulators (5) are designed as reflective and/or transmittive light modulators.

9. Device according to one of claims 5 to 8, **characterised in that** the light modulator (5) is designed as a reflective light modulator, whose optical axis stands perpendicular to an optical axis of the star camera, while the light source (2) emits parallel to the optical axis of the light modulator (5), while a beam splitter (7) is arranged between light source (2) and light modulator (5).

## Revendications

1. Procédé servant à calibrer et à tester des télescopes, au moyen au moins d'une source lumineuse (2) cohérente servant à générer un front d'ondes plat, au moyen d'au moins un modulateur de lumière (5) dynamique, d'un calculateur (6) et d'un catalogue d'étoiles, sachant que le modulateur de lumière (5) servant à générer des structures de diffraction définies est commandé au moyen du calculateur (6), sachant que les structures de diffraction génèrent des formations d'étoiles définies dans le catalogue d'étoiles dans le champ visuel du télescope, au moyen desquelles un mouvement du télescope est simulé, sachant que l'évaluation des données de départ dans un plan focal du télescope permet d'apprécier la direction de visée des pixels du télescope, sachant que l'intensité du rayonnement incident dans le télescope est adaptée conformément aux valeurs a priori connues du catalogue d'étoiles.

2. Procédé selon la revendication 1, **caractérisé en ce que** l'intensité est adaptée grâce à la source lumineuse (2) et/ ou au modulateur lumineux (5).

3. Procédé selon l'une quelconque des revendications précédentes, **caractérisé en ce que** plusieurs lasers de diverses longueurs d'ondes sont utilisés en tant que source lumineuse (2).

4. Procédé selon l'une quelconque des revendications précédentes, **caractérisé en ce que** des modulateurs de lumières réflectifs et/ou transmissifs sont utilisés comme modulateurs de lumière dynamiques (5).

5. Dispositif (1) servant à calibrer et à tester des télescopes, comportant au moins une source de lumière (2) cohérente servant à générer un front d'ondes plat, au moins un modulateur de lumière (5) dynamique, un calculateur (6) et un catalogue d'étoiles, sachant que le modulateur de lumière (5) dynamique est commandé au moyen du calculateur (6) pour générer des structures de diffraction définies, sachant que les structures de diffraction génèrent des formations d'étoiles définies dans le catalogue d'étoiles dans le champ visuel du télescope, au moyen desquelles un mouvement du télescope est simulé, sachant que l'évaluation des données de départ d'un plan focal du télescope permet d'apprécier la direction de visée des pixels du télescope, sachant que l'intensité du rayonnement incident est adaptée conformément aux valeurs a priori connues du catalogue d'étoiles.

6. Dispositif selon la revendication 5, **caractérisé en ce que** l'intensité est adaptée grâce à l'intensité de la source lumineuse (2) et/ou grâce au modulateur de lumière (5).

7. Dispositif selon l'une quelconque des revendications 5 ou 6, **caractérisé en ce que** la source lumineuse (2) est formée par plusieurs lasers de diverses longueurs d'ondes.

8. Dispositif selon l'une quelconque des revendications 5 à 7, **caractérisé en ce que** les modulateurs de lumière (5) dynamiques sont réalisés sous la forme de modulateurs de lumière réflectifs et/ ou transmissifs.

9. Dispositif selon l'une quelconque des revendications 5 à 8, **caractérisé en ce que** le modulateur de lumière (5) est réalisé sous la forme d'un modulateur de lumière réflectif, dont l'axe optique est situé de manière verticale par rapport à l'axe optique du télescope, sachant que la source lumineuse (2) émet de manière parallèle par rapport à l'axe optique du modulateur de lumière (5), sachant qu'un séparateur de faisceau (7) est disposé entre la source lumineuse (2) et le modulateur de lumière (5).
